# EUROPEAN PATENT APPLICATION

(11) **EP 1 345 451 A1**
(43) Date of publication of application: **17.09.2003**
(21) Application number: 02251864.1
(22) Date of filing: 15.03.2002
(51) Int. Cl.: H04N 7/68

(54) **Video processing**

(71) Applicant: BRITISH TELECOMMUNICATIONS public limited company, London EC1A 7AJ (GB)
(72) Inventor: The designation of the inventor has not yet been filed
(74) Representative: Wallin, Nicholas James

(57) **Abstract**

A method of decoding encoded video data, the encoded video data being arranged as a plurality of video picture segments, the data of the video picture segments being arranged so that all header data for the segment are transmitted together and all motion vector data for the segment are transmitted together, the header data and motion vector data being separated by markers, the method comprising:
receiving encoded video data;
attempting to decode header information of an encoded video segment;
when an attempt to decode all of the header information of an encoded video segment is unsuccessful, attempting to decode the motion vectors for the encoded video segment and,
when the motion vectors for the encoded video segment have been successfully decoded, using the motion vectors with any successfully decoded header information.

## Description

This invention relates to video decoding and in particular to methods and apparatus for detecting, isolating and repairing errors within a video bitstream.

A video sequence consists of a series of still pictures or frames. Video compression methods are based on reducing the redundant and the perceptually irrelevant parts of video sequences. The redundancy in video sequences can be categorised into spectral, spatial and temporal redundancy. Spectral redundancy refers to the similarity between the different colour components of the same picture. Spatial redundancy results from the similarity between neighbouring pixels in a picture. Temporal redundancy exists because objects appearing in a previous image are also likely to appear in the current image. Compression can be achieved by taking advantage of this temporal redundancy and predicting the current picture from another picture, termed anchor or reference picture. Further compression may be achieved by generating motion compensation data that describes the displacement between areas of the current picture and similar areas of the reference picture.

Frames coded without reference to another frame are known as intra-frames (also known as I-frames). Pictures that are compressed using temporal redundancy techniques are generally referred to as inter-pictures or inter-frames (also known as P-frames). Parts of an inter-picture can also be encoded without reference to another frame (known as intra-refresh).

Sufficient compression cannot usually be achieved by only reducing the inherent redundancy of a sequence. The redundancy of the encoded bit stream is usually therefore further reduced by means of efficient lossless coding of compression parameters. The main technique is to use variable length codes.

Compressed video is usually corrupted by transmission errors, mainly for two reasons. Firstly, due to utilisation of temporal predictive differential coding (inter-frame coding) an error is propagated both spatially and temporally. In practise this means that, once an error occurs, it is usually visible to the human eye for a relatively long time. Especially susceptible are transmissions at low bit rates where there are only a few intra-coded frames, so temporal error propagation is not stopped for some time. Secondly, the use of variable length codes increases susceptibility to errors. When a bit error alters the code word, the decoder will lose code word synchronisation and also decode subsequent error-free code words (comprising several bits) incorrectly until the next synchronisation (or start) code. A synchronisation code is a bit pattern which cannot be generated from any legal combination of other code words and such start codes are added to the bit stream at intervals to enable resynchronisation. In addition, errors occur when data is lost during transmission. For example, for video applications using an unreliable transport protocol such as UDP in IP Networks, network elements may discard parts of the encoded bit stream.

The transmission of video data over networks prone to transmission errors (for instance mobile networks) is subject to channel errors and channel congestion. Even a low Bit Error Rate (BER) can produce a significant degradation of video quality. Whilst channel error may cause significant visual impairments, it is undesirable to request a transmitting device to retransmit the corrupted data as any re-transmitted information is likely to be subject to similar channel degradation and also processing and transmitting resources may be unnecessarily occupied when other data is to be transmitted. Thus techniques have been developed to detect, isolate and/or conceal errors at a decoder.

There are many ways for the receiver to address the corruption introduced in the transmission path. In general, on receipt of the signal, transmission errors are first detected and then corrected or concealed by the receiver. Error correction refers to the process of recovering the erroneous data preferably as if no errors had been introduced in the first place. Error concealment refers to the process of concealing the effects of transmission errors so that they are hardly visible in the reconstructed video sequence. Typically an amount of redundancy is added by the source transport coding in order to help error detection, correction and concealment.

Current video coding standards define a syntax for a self-sufficient video bit-stream. The most popular standards at the time of writing are ITU-T Recommendation H.263, "Video coding for low bit rate communication", February 1998; ISO/IEC 14496-2, "Generic Coding of Audio-Visual Objects. Part 2: Visual", 1999 (known as MPEG-4); and ITU-T Recommendation H.262 (ISO/IEC 13818-2) (known as MPEG-2). These standards define a hierarchy for bit-streams and correspondingly for image sequences and images.

In accordance with the invention there is provided a method of decoding encoded video data, the encoded video data being arranged as a plurality of video picture segments, the data of the video picture segments comprising header data and motion vector data for the segment, the method comprising:
receiving encoded video data;
attempting to decode header data of an encoded video segment;
when an attempt to decode all of the header data of an encoded video segment is unsuccessful, attempting to decode the motion vector data for the encoded video segment and,
when the motion vector data for the encoded video segment have been successfully decoded, using the motion vector data with any successfully decoded header data.

Preferably the encoded video data is arranged as a plurality of video picture segments, the data of the video picture segments being arranged so that all header data for the segment are transmitted together and all motion vector data for the segment are transmitted together, the header data and motion vector data being separated by markers. Such a data format is defined in international standards H.263 Annex V and ISO 13818 (MPEG4).

Preferably the step of decoding the motion vector data of the encoded video segment comprises decoding a first portion of the motion vector data that represents the motion vector data for the segment and decoding a second portion of the motion vector data that represents the sum of the motion vector data in the encoded video segment and comparing the two portions, the comparison indicating whether the decoding of the motion vector data is successful. The decoding of the motion vector data may be deemed successful if the second portion equals the cumulative effect of the first portion. For instance, the encoded video conforms to H.263, Annex V and the first portion represents the Motion Vector Difference data and the second portion represents the Last Motion Vector Value of the segment.

The method may further comprise attempting to decode header data of an encoded video segment; and when an attempt to decode all of the header data of an encoded video segment is unsuccessful, ignoring the motion vector data associated with those parts of the encoded video data for which the decoding of the associated header data was unsuccessful. The method may also ignore the motion vector data associated with those parts of the encoded video data that occur subsequent in the video segment to those parts of the encoded video data for which the decoding of the associated header data was unsuccessful

When the successfully decoded motion vector data corresponds to a number of valid code words that equals the maximum number of valid code words allowed for the segment, the whole segment may be decoded in an inter-frame manner.

Preferably , when all the motion vector data for the encoded video segment have not been successfully decoded, missing motion vector data is interpolated from any successfully decoded motion vector data for the segment.

The invention is particularly suitable for use with encoded video which conforms to H.263, in particular Annex V, MPEG2 or MPEG4.

In a further aspect of the invention there is provided a video decoder for decoding encoded video data, the encoded video data being arranged as a plurality of video picture segments, the data of the video picture segments comprising header data and motion vector data for the segment, the decoder comprising:
an input to receive encoded video data;
a processor arranged to attempt to decode header data of an encoded video segment;
the decoder being arranged to operate according to the following steps:
   when an attempt to decode all of the header data of an encoded video segment is unsuccessful, to attempt to decode the motion vector data for the encoded video segment and,
   when the motion vector data for the encoded video segment have been successfully decoded, to use the motion vector data with any successfully decoded header data.

Preferably the encoded video data is arranged as a plurality of video picture segments, the data of the video picture segments being arranged so that all header data for the segment are transmitted together and all motion vector data for the segment are transmitted together, the header data and motion vector data being separated by markers.

Preferably the decoder is arranged to decode the motion vector data of the encoded video segment by decoding a first portion of the motion vector data that represents the motion vector data for the segment and decoding a second portion of the motion vector data that represents the sum of the motion vector data in the encoded video segment, the decoder being arranged to compare the two portions, the comparison indicating whether the decoding of the motion vector data is successful. The decoder may be arranged to determine that the decoding of the motion vector data is successful if the second portion equals the cumulative effect of the first portion.

The decoder may be arranged to decode header data of an encoded video segment; and, when an attempt to decode all of the header data of an encoded video segment is unsuccessful, to ignore the motion vector data associated with those parts of the encoded video data for which the decoding of the associated header data was unsuccessful. The decoder may also ignore those parts of the encoded video data that occur subsequent in the video segment to those parts of the encoded video data for which the decoding of the associated header data was unsuccessful.

The decoder is particularly suitable for use with encoded video which conforms to H.263, in particular Annex V of H.263, MPEG2 or MPEG4.

The invention will now be described, by way of example only, with reference to the accompanying drawings, in which:
Figure 1 shows a multimedia mobile communications system;
Figure 2 shows an example of the multimedia components of a multimedia terminal;
Figure 3 shows an example of a video codec; and
Figure 4 shows an example of the structure of a bit stream produced according to a Annex V of H.263;
Figure 5 shows an example of error isolation;
Figure 6 shows an example of the operation of a decoder according to the invention;
Figure 7 shows an example of the structure of a bit stream produced according to a H.263; and
Figure 8 shows an example of the structure of a bit stream produced according to a MPEG-4.

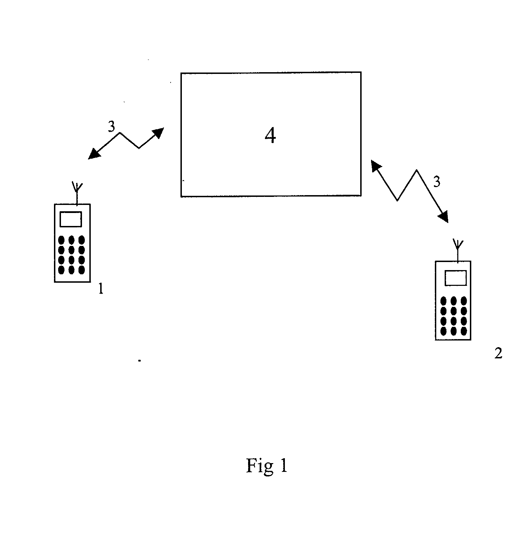

Figure 1 shows a typical multimedia mobile communications system. A first multimedia mobile terminal 1 communicates with a second multimedia mobile terminal 2 via a radio link 3 to a mobile communications network 4. Control data is sent between the two terminals 1,2 as well as the multimedia data.

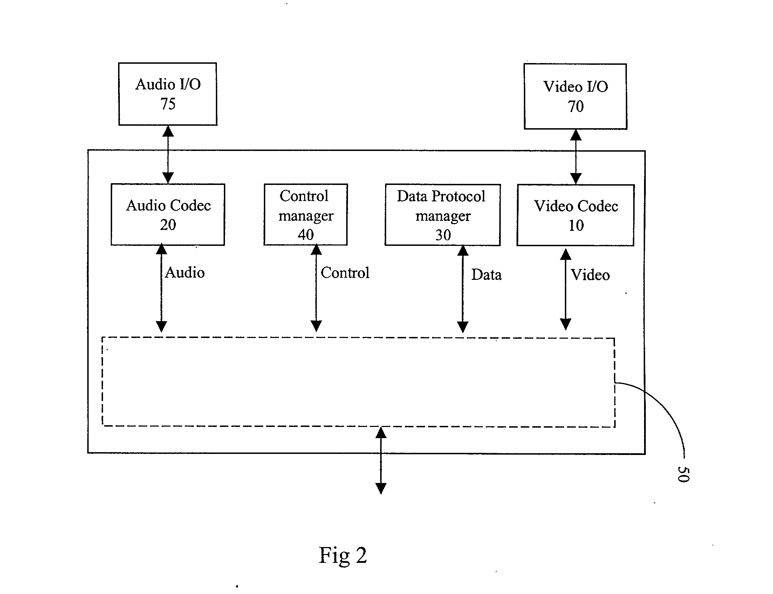

Figure 2 shows the typical multimedia components of a terminal 1. The terminal comprises a video codec 10, an audio codec 20, a data protocol manager 30, a control manager 40, a multiplexer/demultiplexer 50 and a modem 60 (if the required). For packet-based transport networks (e.g. IP based-networks) the multiplexer/demultiplexer 50 and modem 60 are not required.

The video codec 10 receives signals for coding from a video capture or storage device of the terminal (not shown) (e.g. a camera) and receives signals for decoding from a remote terminal 2 for display by the terminal 1 on a display 70. The audio codec 20 receives signals for coding from the microphone (not shown) of the terminal 1 and receive signals for decoding from a remote terminal 2 for reproduction by a speaker (not shown) of the terminal 1. The terminal may be a portable radio communications device, such as a radio telephone.

The control manager 40 controls the operation of the video codec 10, the audio codec 20 and the data protocols manager 30. However, since the invention is concerned with the operation of the video codec 10, no further discussion of the audio codec 20 and protocol manager 30 will be provided.

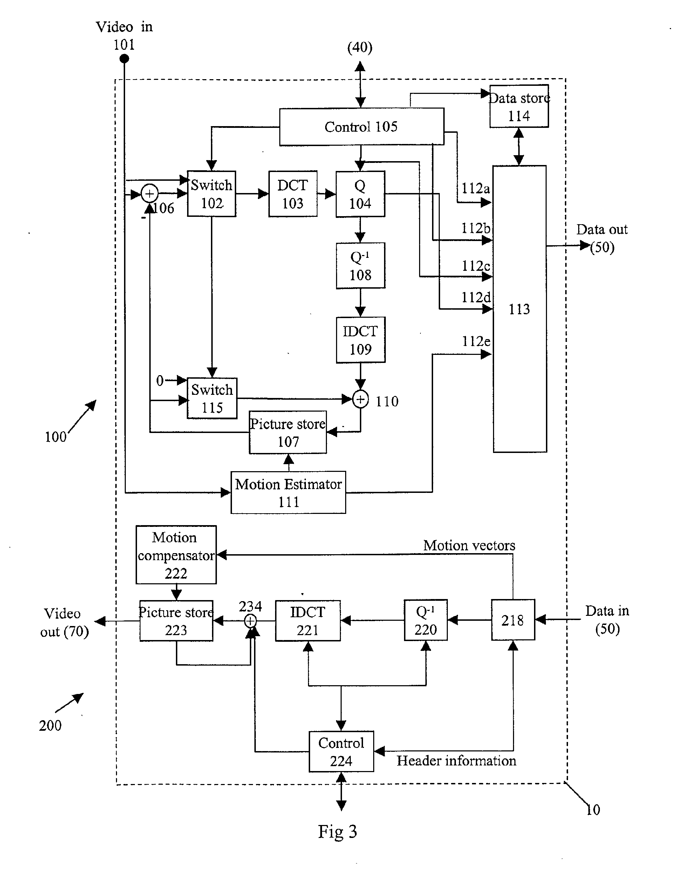

Figure 3 shows an example of a video codec 10 according to the invention. Since H.263 is a widely adopted standard for video in low bit-rate environments, the codec will be described with reference to H.263. However, it is not intended that the invention be limited to this standard.

The video codec comprises an encoder part 100 and a decoder part 200. The encoder part 100 comprises an input 101 for receiving a video signal from a camera or video source of the terminal 1. A switch 102 switches the encoder between an INTRA-mode of coding and an INTER-mode. The encoder part 100 of the video codec 10 comprises a DCT transformer 103, a quantiser 104, an inverse quantiser 108, an inverse DCT transformer 109, an adder 110, a plurality of picture stores 107 (see Figure 3a for more detail), a subtractor 106 for forming a prediction error, a switch 113 and an encoding control manager 105.

The operation of an encoder according to the invention will now be described. The video codec 10 receives a video signal to be encoded. The encoder 100 of the video codec encodes the video signal by performing DCT transformation, quantisation and motion compensation. The encoded video data is then output to the multiplexer 50. The multiplexer 50 multiplexes the video data from the video codec 10 and control data from the control 40 (as well as other signals as appropriate) into a multimedia signal. The terminal 1 outputs this multimedia signal to the receiving terminal 2 via the modem 60 (if required).

In INTRA-mode, the video signal from the input 101 is transformed to DCT coefficients by a DCT transformer 103. The DCT coefficients are then passed to the quantiser 104 that quantises the coefficients. Both the switch 102 and the quantiser 104 are controlled by the encoding control manager 105 of the video codec, which may also receive feedback control from the receiving terminal 2 by means of the control manager 40. A decoded picture is then formed by passing the data output by the quantiser through the inverse quantiser 108 and applying an inverse DCT transform 109 to the inverse-quantised data. The resulting data is added to the contents of the picture store 107 by the adder 110.

In INTER mode, the switch 102 is operated to accept from the subtractor 106 the difference between the signal from the input 101 and a reference picture which is stored in a picture store 107. The difference data output from the subtractor 106 represents the prediction error between the current picture and the reference picture stored in the picture store 107. A motion estimator 111 may generate motion compensation data from the data in the picture store 107 in a conventional manner.

The encoding control manager 105 decides whether to apply INTRA or INTER coding or whether to code the frame at all on the basis of either the output of the subtractor 106 or in response to feedback control data from a receiving decoder. The encoding control manager may decide not to code a received frame at all when the similarity between the current frame and the reference frame is so high or there is not time to code the frame. The encoding control manager operates the switch 102 accordingly.

When not responding to feedback control data, the encoder typically encodes a frame as an INTRA-frame either only at the start of coding (all other frames being inter-frames), or at regular periods e.g. every 5s, or when the output of the subtractor exceeds a threshold i.e. when the current picture and that stored in the picture store 107 are judged to be too dissimilar. The encoder may also be programmed to encode frames in a particular regular sequence e.g. I P P P P I P etc.

The video codec outputs the quantised DCT coefficients 112a, the quantising index 112b (i.e. the details of the quantising used), an INTRA/INTER flag 112c to indicate the mode of coding performed (I or P), a transmit flag 112d to indicate the number of the frame being coded and the motion vectors 112e for the picture being coded. These are multiplexed together by the multiplexer 50 together with other multimedia signals.

The decoder part 200 of the video codec 10 comprises an inverse quantiser 220, an inverse DCT transformer 221, a motion compensator 222, one or more picture stores 223 and a controller 224. The controller 224 receives video codec control signals demultiplexed from the encoded multimedia stream by the demultiplexer 50. In practice the controller 105 of the encoder and the controller 224 of the decoder may be the same processor.

Considering the terminal 1 as receiving coded video data from terminal 2, the operation of the video codec 10 will now be described with reference to its decoding role. The terminal 1 receives a multimedia signal from the transmitting terminal 2. The demultiplexer 50 demultiplexes the multimedia signal and passes the video data to the video codec 10 and the control data to the control manager 40. The decoder 200 of the video codec decodes the encoded video data by inverse quantising, inverse DCT transforming and motion compensating the data. The controller 224 of the decoder checks the integrity of the received data and, if an error is detected, attempts to correct or conceal the error in a manner to be described below. The decoded, corrected and concealed video data is then stored in one of the picture stores 223 and output for reproduction on a display 70 of the receiving terminal 1.

In H.263, the bit stream hierarchy has four layers: block, macroblock, picture segment and picture layer. A block relates to 8 × 8 pixels of luminance or chrominance. Block layer data consist of uniformly quantised discrete cosine transform coefficients, which are scanned in zigzag order, processed with a run-length encoder and coded with variable length codes.

A macroblock relates to 16 x 16 pixels (or 2 x 2 blocks) of luminance and the spatially corresponding 8 x 8 pixels (or block) of chrominance components.

The picture segment layer can either be a group of blocks (GOB) layer or a slice layer. Each GOB or slice is divided into macroblocks. Data for each GOB consists of an optional GOB header followed by data for macroblocks. If the optional slice structured mode is used, each picture is divided into slices instead of GOBs. A slice contains a number of macroblocks but has a more flexible shape and use than GOBs. Slices may appear in the bit stream in any order. Data for each slice consists of a slice header followed by data for the macroblocks.

The picture layer data contain parameters affecting the whole picture area and the decoding of the picture data. Most of this data is arranged in a so-called picture header.

MPEG-2 and MPEG-4 layer hierarchies resemble the one in H.263.

Errors in video data may occur at any level and error checking may be carried out at any or each of these levels.

The invention has particular application in situations in which the encoded video data is arranged as video picture segments and the macroblocks in the segment are arranged so that header information for all the macroblocks in the segment are transmitted together followed by the motion vectors for all the macroblocks in the segment and then by the DCT coefficients for the macroblocks in the segment. The header, motion vector and DCT partitions are separated by markers, allowing for resynchronisation at the end of a partition in which an error occurred. Each segment contains the data for an integer number of macroblocks.

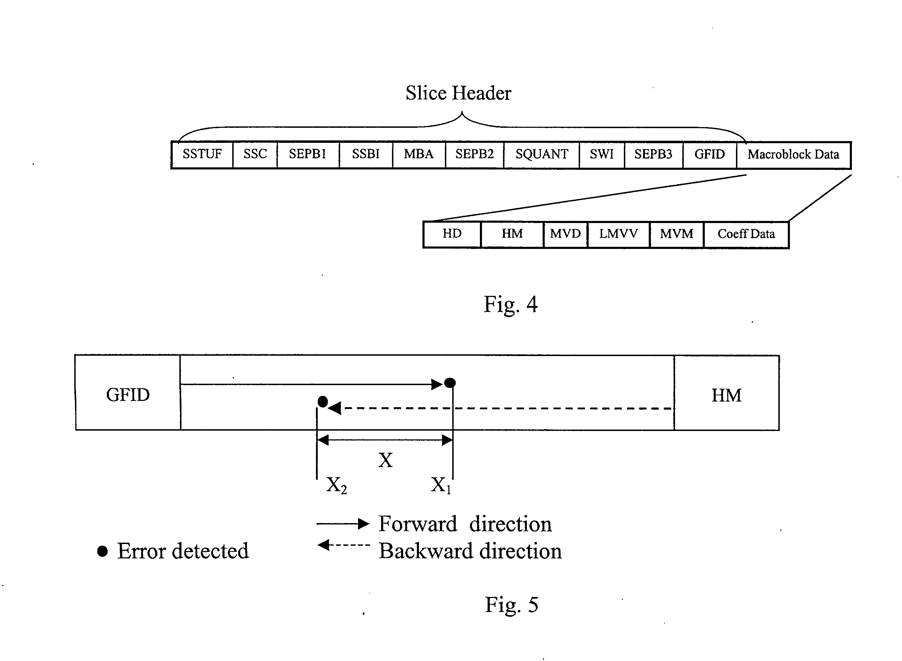

One example of such a data structure is when the picture segment is a slice and the data partitioned slice (DPS) mode (Annex V of H.263) is implemented. The data structure for this DPS mode is as shown in Figure 4. The data comprises a slice header followed by macroblock data. The slice header includes the following fields:
SSTUF, a code word of variable length and used directly before an SSC code word whenever needed to ensure that the SSC is byte-aligned;
SSC, Slice Start Code, a word of 17 bits of value 0000 0000 0000 0000 1;
Slice Emulation Prevention Bits, SEPB1, SEPB2, SEPB3, each a single bit always having the value of 1 in order to prevent start code emulation;
SSBI, Slice Sub-Bit Stream Indicator, a codeword of 4 bits used in Continuous Presence Multipoint and Video Multiplex operation;
MBA, Macroblock Address, a code word representative of the macroblock number of the first macroblock in the current slice as counted from the beginning of the picture;
SQUANT, Quantiser Information, a fixed length code word of 5 bits which indicates the quantiser to be used for that slice;
SWI, Slice Width Indication in Macroblocks, a code word present only if a rectangular slice sub mode is active;
GFID, the frame identifier, which has the same value in every slice header of a given picture.

The macroblock data comprises the following fields: HD, Header Data, contains the COD and MCBPC information for all the macroblocks in the slice. The COD is set to 0 when the macroblock is coded and set to 1 if no further information is transmitted for a macroblock. MCBPC is a code word giving information about the macroblock type and the coded block pattern for chrominance. In Annex V of H.263, a reversible variable length code (RVLC) is used to combine the COD and the MCBPC for all the macroblocks in the packet. A header marker (HM), which is a fixed code word of 9 bits, terminates the header partition. When reverse coding is used by a decoder, the decoder searches for this marker to decode the header data in the reverse direction.

The macroblock data further comprises motion vector data (MVD) which is included for all INTER macroblocks and consists of a variable length codeword for the horizontal component followed by a variable length codeword for the vertical component. In DPS mode, the motion vector data represents the difference between the motion vector for the previous macroblock and the current one. That is to say, the first motion vector of a segment is coded using a predictor value of 0 for both the horizontal and the vertical component and the motion vectors for the subsequent coded macroblocks of the segment are coded predictively using the motion vector difference. The last motion vector value (LMVV) contains the last motion vector in the packet or segment. It is coded using a predictor value of 0 for both the horizontal and vertical components i.e. it represents the sum of all the MVD for the segment. If there are no motion vectors or only one motion vector in the segment or packet, LMVV is not present. The motion vector marker (MVM) is a code word of 10 bits having a fixed non-symmetrical value. The MVM terminates the motion vector partition. When reverse coding is used in a decoder, the decoder searches for this marker.

The coefficient data comprises various optional fields (INTRA_MODE, CBPB, CBPC, DQUANT), CBPY, and the DCT coefficients for the macroblocks of the segment. The DCT coefficients comprise INTRA DC, an 8-bit word representing the DC co-efficient for INTRA blocks, and TCOEF, the DCT coefficients) for the block. TCOEF has a value from 1 to 102, which value indicates (a) whether the coefficient is the last non-zero coefficient in the macroblock, (b) the number of zeros preceding the coded coefficient and (c) the level of the coefficient. TCOEF is coded using a variable length code.

A slice comprises NxM macroblocks, where N and M are integers. Say there are 11 macroblocks in a slice with N=1 and M=11. Thus, in the macroblock data, the HD field should include header data for all 11 macroblocks of the slice followed by the header marker HM. A receiving decoder therefore tries to decode 11 headers and checks that the next data received is the header marker HM. If an error is detected in the header data, or the decoder manages to decode the header data for 11 macroblocks but this data is not followed by a header marker, the data is deemed to be corrupted. The decoder then starts from the header marker HM and decodes in the reverse direction until a point in the data is reached at which another error is detected. Thus, an intermediate portion of code labelled X in Figure 5 is identified which includes a possible error. As the macroblock motion vector information and the macroblock header information for a segment are not synchronised in any way, an error in the header usually means that the motion vector (and DCT) information is discarded. Thus conventionally none of the macroblocks of the segment will be updated using either the motion vector information or DCT information of the segment.

In the invention, even if an error is detected in the header data HD of the segment, the decoder attempts to decode the motion vector data MVD for the segment. The decoder therefore looks for the Header Marker HM to detect the end of the Header Data and decodes the data between the Header Marker HM and the Motion Vector Marker MVM. In Annex V of H.263 Reversible Variable Length Codes (RVLC) are used and it is possible to decode a received bit stream in a forward and a reverse direction. Thus the decoder decodes the data between HM and MVM in a forward direction and decodes the data is a reverse direction from MVM towards HM and then determines whether the MVD decoded is equal to the LMVV. If so, the motion vector data is deemed to be uncorrupted.

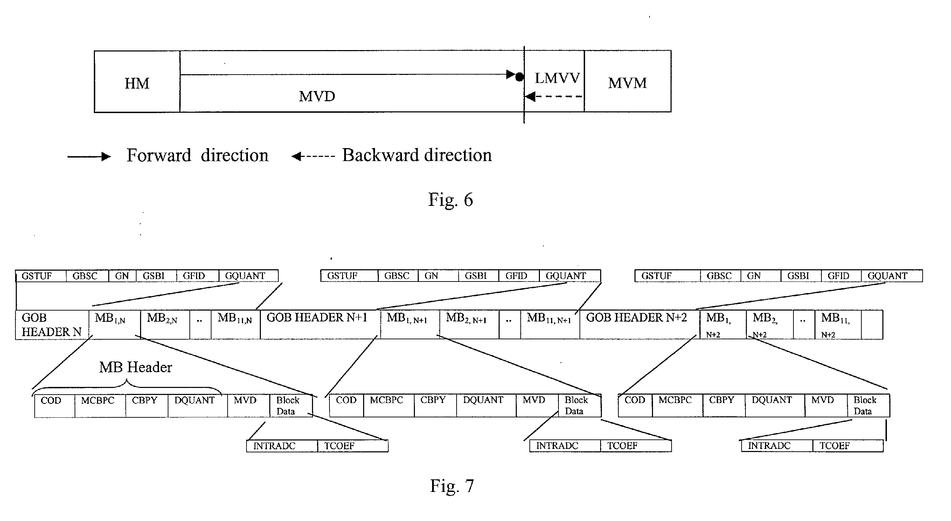

This can be illlustrated with reference to Figure 6. Consider the Header Marker HM, Motion Vector Marker MVM and the data (MVD and LMVV) between the two markers. It is not required that there is MVD for each macroblock in a segment therefore there is no way of knowing how many codewords are included in the MVD. The decoder decodes the MVD in the forward direction in a conventional manner i.e. the decoder looks for valid codewords in the data between the HM and the MVM. If there is no data between HD and MVM, no motion vector is associated with the macroblocks for the segment (since LMVV is not included if there is no motion vector data included in the segment). If all the data between HD and MVM corresponds to a single valid MVD codeword, the data is taken to represent a single motion vector (since LMVV is not included if there is only one motion vector included in the segment). However, say the decoder can decode valid MVD codewords in the data until the point marked • in Figure 6. The decoder then decodes the data in the reverse direction from MVM, looking for a valid code word for LMVV. If one is found and the valid code word found terminates at point •, then the motion vector data decoded prior to point • in the forward direction is compared with the LMVV and if the two are equal the motion vector data is deemed to be uncorrupted.

If a valid LMVV codeword is found in the reverse direction but it does not terminate at the same point as the termination of the decoding in the forward direction (i.e. at point • in Figure 6), then the decoder determines that the motion vector information is corrupted.

Uncorrupted motion vector data may be used in association with any uncorrupted macroblock header data to decode the associated macroblock. In addition the uncorrupted motion data may be used in subsequent error correction. For instance, considering the case shown in Figure 5 where an error-containing portion X has been isolated. In low bit rate applications (e.g. Bit Error Rate <10⁻³), the assumption is made that the encoded video data is error free prior to the detection of the error in the reverse direction (i.e. prior to X₂) and error free after the detection of the error in the forward direction (i.e. after X₁). Thus all the macroblocks occurring prior to X₂ and after X₁ can use the motion vector data that has been deemed to be uncorrupted.

As mentioned above, the macroblock header data includes information MCBPC as to how a macroblock is coded i.e. I or P. If a macroblock is coded in an intra-frame manner, then no motion vector data will be associated with the macroblock. If the macroblock is coded in an inter-frame manner, then motion vector data will be asssociated with the macroblock. Thus, when decoding in either direction, it is known whether there is any motion vector data associated with the macroblock.

This may be illustrated for a slice having 11 macroblocks MB₁ to MB₁₁ with reference to Figure 5. The decoder starts to decode in the forward direction. Reading the MCBPC of the decoded macroblock header, the type of each macroblock is known. From the MCBPC and the CBPY the number of DCT blocks that an macroblock has can be determined. Say that the header data for the first five macroblocks MB₁ to MB₅ are decoded correctly, together with the associated motion vector data (if any). Say an error is detected between the sixth and the eighth macroblocks. These macroblocks are skipped and the decoder starts to decode the data in the reverse direction, as shown in Figure 5. Thus, starting from the end of the motion vector data, it is possible to continue to decode the motion vector data for those macroblocks occurring after the skipped macroblocks MB₆ to MB₈.

Thus, say that the last macroblock of the segment MB₁₁ is inter-coded, the decoder decodes the last macroblock by decoding the first code word (LMVV) of the motion vector data in the reverse direction. Next, say MB₁₀ is intra-coded. The decoder decodes MB₁₀ without reference to the motion vector data. Say MB₉ is inter-frame coded, then the decoder uses the next codeword in the reverse direction in the motion vector data to decode MB₉. As the header data for MB₈ was corrupted, the decoder may be unable to use the motion vector data (if any) occurring between the motion vector data associated with MB₁₋₅ and the motion vector data associated with MB₉₋₁₁.

However it may be possible to do so. For instance, in the above example, say that the motion vector data occurring between the motion vector data associated with MB₁₋₅ and the motion vector data associated with MB₉₋₁₁ corresponds to three valid motion vector data code words. As the number of valid code words equals the number of skipped macroblocks, there is therefore a good probability that the three macroblocks that have been skipped MB₆₋₈ were inter-coded. The remaining motion vector data may therefore be used to predict the data for MB₆₋₈ and hence the skipped macroblocks are reconstructed by the decoder. Additionally or alternatively, the decoder may assess whether the number of valid code words in the motion vector data as a whole equals the number of macroblocks in the segment. If so, the decoder may assume that all the macroblocks of the segment are coded in an inter-frame manner and use the motion vector data to predict the data for each macroblock, whether or not the macroblock header is corrupted.

Thus whether or not the header data is decoded succesfully, the motion vector data is decoded and a check made to see if the motion vector data is corrupted. this check involves comparing the incremental sum of the MVD data with the LMVV. If the decoding of the header data is successful, then the header data is examined to determine the number of motion vectors that should exist for the macroblock.

In a preferred implementation of the invention, if the attempt to decode motion vector data is only partially successful, resulting in the successful decoding of some of the motion vector data and the unsuccessful decoding of the remaining motion vector data of the segment, then the missing motion vector data for the segment is interpolated from the MVD for other macroblocks within the same segment of video data.

If the motion vector data for less than a predetermined proportion of macroblocks in a segment are lost, then the lost motion vector data is interpolated from the motion vector data for the other macroblocks in the segment. For instance, say 50% of the macroblocks within a segment are successfully decoded. The other 50% of motion vector data is then interpolated from this 50% successfully decoded data.

Table 1 shows an example of the status of decoded motion vector data for a ten macroblock segment of data:

**Table 1**

| | | | | | | | | | | |
|---|---|---|---|---|---|---|---|---|---|---|
| √ | MVD₁ | MVD₂ | | MVD4 | | MVD6 | | | MVD₉ | MVD₁₀ |
| X | | | MVD₃ | | MVD₅ | | MVD₇ | MVD₈ | | |

| | | | | | | | | | | |
|---|---|---|---|---|---|---|---|---|---|---|
| where√means that the MVD for a macroblock was decoded successfully | | | | | | | | | | |
| X means that the MVD for a macroblock was not decoded successfully | | | | | | | | | | |

As can be seen, less than 50% of the motion vector data has been lost. Therefore the decoder interpolates the lost motion vectors from the ones that have been decoded successfully.

In a second embodiment of the invention, the picture segment layer is a group of blocks. As shown in Figure 7, the data structure for each group of blocks consists of a GOB header followed by data for the macroblocks of the GOB N (MB_{1N}, MB_{2N} etc.). Each GOB contains one or more rows of macroblocks. The GOB header includes: GSTUF, a codeword of variable length to provide byte alignment; GBSC, a Group of Block start code, which is a fixed codeword of seventeen bits 0000 0000 0000 0000 1; GN, the number of the GOB being coded; GFID, the GOB frame identifier which has the same value for all GOBs of the same picture; and GQUANT, a fixed length codeword which indicates the quantiser to be used for the decoder. Following the GOB header is the macroblock data which consists of a macroblock header followed by data for the blocks of the macroblock.

According to H.263, data for each macroblock consists of a header followed by data for the blocks. Fields of the header are as set out in H.263 and comprise:
COD indicates if the macroblock is coded;
MCBPC indicates the macroblock type (I, P etc) and the coded block pattern for the chrominance data;
MODP used in bi-directional prediction;
CBPB used in bi-directional prediction;
CBPY indicates the coded block pattern for the luminance data
DQUANT defines the Quantiser to be used.

The data for the macroblock comprises:
MVD MVD is included for all inter macroblocks and consists of a variable length code (VLC) for the horizontal component followed by a VLC for the vertical component.
MVD₂₋₄ These three codewords are only present when in Advanced Prediction Mod (Annex F) or Deblocking Filter Mode (Annex J).
MVDB used in bi-directional prediction.

For simplicity, Figure 7 shows the data structure for a group of blocks when bi-directional prediction is not enabled nor Annex F or Annex J implemented. Therefore MODB, CBPB, MVD₂₋₄ and MVDB are not used. Therefore, for each macroblock within a GOB, there will be COD, MCBPC, CBPY, DQUANT, MVD and the block data for the blocks of the macroblock.

The data for the block consists of INTRA DC, an 8-bit word representing the DC co-efficient for INTRA blocks, and TCOEF, the DCT coefficient for the block. TCOEF has a value from 1 to 102, which value indicates (a) whether the coefficient is the last non-zero coefficient in the macroblock, (b) the number of zeros preceding the coded coefficient and (c) the level of the coefficient. TCOEF is coded using a variable length code.

Say a GOB includes 11 macroblocks. When a new GOB is received, the decoder decodes the data for the first macroblock MB₁ of the segment. This is achieved by reading COD and MCBPC to determine the type of macroblock (I or P) and the coded chrominance block pattern, CBPY to determine the coded luminance block pattern and DQUANT to determine if the quantiser to be used is altered.

The decoder then reads the MVD and the block data and decodes the information as described with reference to part 200 of Figure 3.

Since the data structure as shown in Figure 7 does not include the markers as used in the DPS mode shown in Figure 4, the decoder has to decode all the macroblock data and associated block data for the slice in order to determine if the segment data includes an error. Thus for segment N the decoder has to decode the following data MB_{1,N}, MB_{2,N} ... MB_{11,N}. In this embodiment, it is far more complicated for the decoder to identify the motion vector data and attempt to decode it. However, one feasible solution is if the code words for the motion vector data are unique to the motion vector data. In this case, the decoder can search the bit stream for code words defining motion vector data and use these appropriately.

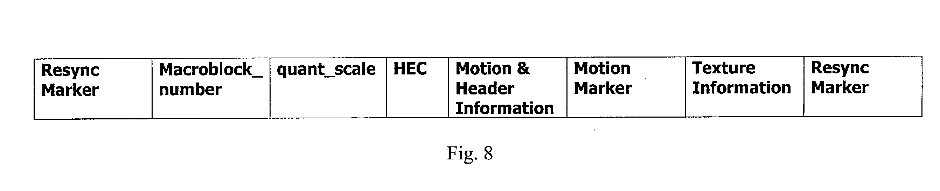

The invention is also applicable to a video bit stream that complies with ISO/IEC 14496-2, "Generic Coding of Audio-Visual Objects. Part 2: Visual", 1999 (known as MPEG-4). MPEG 4 adopts a video packet approach having periodic resynchronisation markers throughout the bit stream. In Part E 1.2 of Annex E of this coding scheme, data partitioning similar to that adopted in Annex V of H.263 is described. An example of the data structure adopted in MPEG-4 is shown in Figure 8. In a similar manner as described above with reference to the first embodiment of the invention, the decoder receives the encoded video data and attempts to decode the header information of an encoded video segment. When an attempt to decode all of the header information of an encoded video segment is unsuccessful, the decoder attempts to decode the motion vector data for the encoded video segment and, when the motion vector data for the encoded video segment have been successfully decoded, the decoder uses the motion vector data with any successfully decoded header information.

The invention is not intended to be limited to the video coding protocols discussed above: these are intended to be merely exemplary. The invention is applicable to any video coding protocol using motion compensation techniques. The operation of the decoder as discussed above allows a receiving decoder to determine the best cause of action if a picture is corrupted.

## Claims

1. A method of decoding encoded video data, the encoded video data being arranged as a plurality of video picture segments, the data of the video picture segments comprising header data and motion vector data for the segment, the method comprising:
receiving encoded video data;
attempting to decode header data of an encoded video segment;
when an attempt to decode all of the header data of an encoded video segment is unsuccessful, attempting to decode the motion vector data for the encoded video segment and,
when the motion vector data for the encoded video segment have been successfully decoded, using the motion vector data with any successfully decoded header data.

2. A method according to claim 1 in which the encoded video data is arranged as a plurality of video picture segments, the data of the video picture segments being arranged so that all header data for the segment are transmitted together and all motion vector data for the segment are transmitted together, the header data and motion vector data being separated by markers.

3. A method according to Claim 1 or 2 wherein the step of decoding the motion vector data of the encoded video segment comprises decoding a first portion of the motion vector data that represents the motion vector data for the segment and decoding a second portion of the motion vector data that represents the sum of the motion vector data in the encoded video segment and comparing the two portions, the comparison indicating whether the decoding of the motion vector data is successful.

4. A method according to claim 3 wherein the decoding of the motion vector data is deemed successful if the second portion equals the cumulative effect of the first portion.

5. A method according to any of claims 1 to 4 further comprising attempting to decode header data of an encoded video segment;
when an attempt to decode all of the header data of an encoded video segment is unsuccessful, ignoring the motion vector data associated with those parts of the encoded video data for which the decoding of the associated header data was unsuccessful.

6. A method according to claim 5 further comprising ignoring the motion vector data associated with those parts of the encoded video data that occur subsequent in the video segment to those parts of the encoded video data for which the decoding of the associated header data was unsuccessful

7. A method according to any preceding claim wherein when the successfully decoded motion vector data corresponds to a number of valid code words that equals the maximum number of valid code words allowed for the segment, decoding the whole segment in an inter-frame manner.

8. A method according to any preceding claim wherein, when all the motion vector data for the encoded video segment have not been successfully decoded, interpolating motion vector data from any successfully decoded motin vector data for the segment.

9. A method according to any preceding claim wherein the encoded video conforms to H.263, in particular Annex V, MPEG2 or MPEG4.

10. A video decoder for decoding encoded video data, the encoded video data being arranged as a plurality of video picture segments, the data of the video picture segments comprising header data and motion vector data for the segment, the decoder comprising:
an input to receive encoded video data;
a processor arranged to attempt to decode header data of an encoded video segment;
the decoder being arranged to operate according to the following steps:
when an attempt to decode all of the header data of an encoded video segment is unsuccessful, to attempt to decode the motion vector data for the encoded video segment and,
when the motion vector data for the encoded video segment have been successfully decoded, to use the motion vector data with any successfully decoded header data.

11. A decoder according to claim 10 in which the encoded video data is arranged as a plurality of video picture segments, the data of the video picture segments being arranged so that all header data for the segment are transmitted together and all motion vector data for the segment are transmitted together, the header data and motion vector data being separated by markers.

12. A decoder according to Claim 10 or 11 wherein the decoder is arranged to decode the motion vector data of the encoded video segment by decoding a first portion of the motion vector data that represents the motion vector data for the segment and decoding a second portion of the motion vector data that represents the sum of the motion vector data in the encoded video segment,
the decoder being arranged to compare the two portions, the comparison indicating whether the decoding of the motion vector data is successful.

13. A decoder according to claim 12 wherein the decoder is arranged to determine that the decoding of the motion vector data is successful if the second portion equals the cumulative effect of the first portion.

14. A decoder according to any of claims 10 to 13 wherein the decoder is further arranged to decode header data of an encoded video segment;
and, when an attempt to decode all of the header data of an encoded video segment is unsuccessful, to ignore the motion vector data associated with those parts of the encoded video data for which the decoding of the associated header data was unsuccessful.

15. A decoder according to claim 14 wherein the decoder is arranged to ignore those parts of the encoded video data that occur subsequent in the video segment to those parts of the encoded video data for which the decoding of the associated header data was unsuccessful.

16. A decoder according to any of claims 10 to 15 wherein the encoded video conforms to H.263, in particular Annex V of H.263, MPEG2 or MPEG4.
